# EUROPEAN PATENT SPECIFICATION

(11) **EP 4 250 830 B1**
(45) Date of publication and mention of the grant of the patent: **30.09.2026**
(21) Application number: 23184015.8
(22) Date of filing: 12.07.2017
(51) Int. Cl.: H04B 7/26, H04W 56/00, H04L 5/00, H04W 80/08

(54) **METHOD AND DEVICE FOR TRANSMITTING/RECEIVING SYNCHRONIZATION SIGNAL AND SYSTEM INFORMATION FOR TERMINAL IN NEW WIRELESS ACCESS NETWORK**
VERFAHREN UND VORRICHTUNG ZUM SENDEN/EMPFANGEN EINES SYNCHRONISATIONSSIGNALS UND SYSTEMINFORMATIONEN FÜR EIN ENDGERÄT IN EINEM NEUEN DRAHTLOSZUGANGSNETZWERK
PROCÉDÉ ET DISPOSITIF DESTINÉS À ÉMETTRE/À RECEVOIR UN SIGNAL DE SYNCHRONISATION ET DES INFORMATIONS SYSTÈME POUR UN TERMINAL DANS UN NOUVEAU RÉSEAU D'ACCÈS SANS FIL

(30) Priority: 15.07.2016 KR 20160089972; 11.07.2017 KR 20170087597
(43) Date of publication of application: 27.09.2023
(62) Document number(s) of the earlier application(s) in accordance with Art. 76 EPC: 17827948.5 / 3 462 639
(73) Proprietor: KT Corporation, Seongnam-si, Gyeonggi-do 13606 (KR)
(72) Inventor: PARK, Kyujin, 06763 SEOUL (KR); CHOI, Woo-jin, 06763 SEOUL (KR)
(74) Representative: Frenkel, Matthias Alexander

(56) References cited:
- US-A1- 2008 205 351
- US-A1- 2016 191 216
- INTEL CORPORATION: "Forward compatibility for new radio interface", vol. RAN WG1, no. Busan, Korea; 20160411 - 20160415, 2 April 2016 (2016-04-02), XP051080160, Retrieved from the Internet <URL:http://www.3gpp.org/ftp/tsg_ran/WG1_RL1/TSGR1_84b/Docs/> [retrieved on 20160402]
- SAMSUNG: "Proposed set of numerologies for NR", vol. RAN WG1, no. Nanjing, China; 20160523 - 20160527, 13 May 2016 (2016-05-13), XP051090303, Retrieved from the Internet <URL:http://www.3gpp.org/ftp/tsg_ran/WG1_RL1/TSGR1_85/Docs/> [retrieved on 20160513]

## Description

### TECHNICAL FIELD

The present disclosure relates to a frame structure for a next-generation/5G radio access network (hereinafter, referred to as a new radio (NR)) and a method of transmitting or receiving a synchronization signal and system information in the NR.

### DESCRIPTION OF THE RELATED ART

Recently, the 3rd generation partnership project (3GPP) has approved the "Study on New Radio Access Technology", which is a study item for research on next-generation/5G radio access technology. On the basis of such a study item, Radio Access Network Working Group 1 (RAN WG1) has been discussing frame structures, channel coding and modulation, waveforms, multiple access methods, and the like for a new radio (NR).

The NR is required to be designed not only to provide an improved data transmission rate as compared with that of long-term evolution (LTE)/LTE-Advanced, but also to meet various requirements for each detailed and specific usage scenario.

Enhanced mobile broadband (eMBB), massive machine-type communication (mMTC), and ultra reliable and low latency communication (URLLC) are introduced as representative usage scenarios in the NR. It is necessary for flexible frame structures compared with the LTE/LTE-Advanced to be designed to meet the requirements of the respective usage scenarios.

In particular, there is necessity for designing resource allocation structures differently from one another for each usage scenario, and it is also necessary for effectively designing a frame structure and physical signals/channels thereof for efficiently supporting a NR user equipment operating under resource allocation structures differently designed from one another through one NR frequency band.
US 2008/205351 relates to subcarrier spacing in mobile communication systems that employ Orthogonal Frequency Division Multiplexing (OFDM), and more particularly to techniques that enable a user equipment operating in such a system to detect which of a number of possible subcarrier spacings are presently being used for communications.
The article "Forward compatibility for new radio interface" (Intel Corporation, 3GPP Draft, R1-162381) discusses issues and solutions to achieve forward compatibility in Phase II and beyond of the new RAT (NR) specification.
The article "Proposed set of numerologies for NR" (Samsung, 3GPP Draft, R1-163998) discusses and proposes numerology for NR.
US 2016/191216 relates to the transmission of different waveforms using flexible sub-carrier spacing and symbol duration. In some particular embodiments, the waveforms are orthogonal frequency division multiplexed (OFDM) waveforms having different parameters.

### DETAILED DESCRIPTION OF THE INVENTION

### TECHNICAL PROBLEM

It is an objective of the present disclosure is to provide a frame structure capable of supporting various usage scenarios in the NR and a method of performing operations to transmit and/or receive a synchronization signal and system information, between a base station and a user equipment, in one NR frequency band.

### TECHNICAL SOLUTION

Embodiments of the invention are outlined in the appended independent claims. Further detailed embodiments are given by the dependent claims.

### ADVANTAGEOUS EFFECTS

According to the embodiments of the present disclosure, a frame structure may be defined for supporting various usage scenarios in the NR, and a base station and a user equipment may be enabled to transmit and receive a synchronization signal and system information in one NR frequency band.

### DESCRIPTION OF THE DRAWINGS

FIG. 1 is a diagram illustrating an exemplary time division multiplexer (TDM) based frame structure for the NR according to some embodiments of the present disclosure.
FIG. 2 and FIG. 3 are diagrams illustrating exemplary frequency division multiplexer (FDM) based frame structures for the NR according to some embodiments of the present disclosure.
FIG. 4 is a diagram illustrating an exemplary hybrid TDM/FDM based frame structure for the NR according to some embodiments of the present disclosure.
FIG. 5 is a flowchart illustrating a method for transmitting a synchronization signal for initial access of a user equipment in the NR according to some embodiments of the present disclosure.
FIG. 6 is a flowchart illustrating a method for receiving a synchronization signal for initial access of a user equipment in the NR according to some embodiments of the present disclosure.
FIG. 7 is a diagram illustrating a base station according to some embodiments of the present disclosure.
FIG. 8 is a diagram illustrating a user equipment according to some embodiments of the present disclosure.

### MODE FOR CARRYING OUT THE INVENTION

Hereinafter, the present preferred embodiments of the disclosure will be described in detail with reference to the accompanying drawings. In denoting elements of the drawings by reference numerals, the same elements will be referenced by the same reference numerals although the elements are illustrated in different drawings. In the following description of the disclosure, detailed description of known functions and configurations incorporated herein may be omitted when it may make the subject matter of the disclosure rather unclear.

In the present disclosure, a wireless communication system refers to a system for providing various communication services such as a voice communication service, a packet data service, etc. The wireless communication system includes a user equipment (UE) and a base station (BS).

In the present disclosure, the UE is defined as a generic term including devices used in wireless communication. Therefore, the UE may include i) UEs in wideband code division multiple access (WCDMA), long term evolution (LTE), high speed packet access (HSPA), international mobile telecommunications (IMT)-2020 (5G or new radio) and ii) a mobile station (MS) in global system for mobile communications (GSM), a user terminal (UT), a subscriber station (SS), a wireless device, or the like.

The BS or a cell generally refers to a station communicating with the UE. In the present disclosure, the BS or cell is defined as a generic term including all of various coverage areas, such as a Node-B, an evolved Node-B (eNB), a gNode-B (gNB), a low power node (LPN), a sector, a site, various types of antennas, a base transceiver system (BTS), an access point, a point (e.g., a transmitting point, a receiving point, or a transceiving point), a relay node, a megacell, a macrocell, a microcell, a picocell, a femtocell, a remote radio head (RRH), a radio unit (RU), a small cell, or the like.

Since each of the above-described various cells is controlled by a BS, therefore the BS may be classified into two categories. That is, the BS may be referred to 1) an apparatus that provides a megacell, a macrocell, a microcell, a picocell, a femtocell, and a small cell, as a radio coverage area, or 2) the radio coverage area itself. In 1), the BS may be referred to any or all apparatuses providing radio coverage area by being controlled by one identical entity or by cooperating with each other. According to a method of establishing a radio coverage area, the BS may be a point, a transmission/reception point, a transmission point, a reception point, or the like. In 2), the BS may be a radio coverage area itself for transmitting or receiving a signal from UE perspective or neighboring BS perspective.

In the present disclosure, the cell may refer to a coverage of a signal transmitted from a transmission point or a transmission/reception point, a component carrier having the coverage of the signal transmitted from the transmission point or the transmission/reception point, or the transmission/reception point itself.

In the present disclosure, the UE and the BS are entities performing uplink or downlink operation used to embody the technology and technical conceptions described in the present disclosure. The UE and the BS are defined as a generic term and not limited to specific terms or words.

The uplink (UL) refers to a data transmission/reception scheme by a UE to/from a BS, and the downlink (DL) refers to a data transmission/reception scheme by a BS to/from a UE.

Uplink transmission and downlink transmission may be performed based on i) a time division duplex (TDD) technique performing the transmission through different time slots, ii) a frequency division duplex (FDD) technique performing the transmission through different frequencies, or iii) a hybrid technique of the FDD and TDD.

Further, in some wireless communication systems, a related standard specification defines an UL and a DL to be established based on a single carrier or a pair of carriers.

The UL and/or DL may include control channels for transmitting control information. Such control channels may include a physical DL control channel (PDCCH), a physical UL control channel (PUCCH), or the like. Furthermore, the UL and/or DL may include data channels for transmitting data. Such data channel may include a physical DL shared channel (PDSCH), a physical UL shared channel (PUSCH), or the like.

The DL may denote communication or a communication path from multiple transmission/reception points to a UE, and the UL may denote communication or a communication path from the UE to the multiple transmission/reception points. In the DL, a transmitter may be a part of multiple transmission/reception points, and a receiver may be a part of the UE. In the UL, a transmitter may be a part of the UE and a receiver may be a part of multiple transmission/reception points.

Hereinafter, transmission and reception of a signal through a channel such as the PUCCH, the PUSCH, the PDCCH, or the PDSCH, may be described as the transmission and reception of the PUCCH, the PUSCH, the PDCCH, or the PDSCH.

Meanwhile, higher layer signaling includes radio resource control (RRC) signaling transmitting RRC information containing an RRC parameter.

The BS performs DL transmission to the UE. The BS may transmit a physical DL control channel for transmitting i) DL control information such as scheduling required to receive a DL data channel that is a primary physical channel for unicast transmission and ii) scheduling approval information for transmission through an UL data channel. Hereinafter, transmission and reception of a signal through each channel will be described as transmission and reception of a corresponding channel.

Any of multiple access techniques may be applied to wireless communication systems according to the present disclosure, and therefore no limitation is imposed on them. Various multiple access techniques may include time division multiple access (TDMA), frequency division multiple access (FDMA), CDMA, orthogonal frequency division multiple access (OFDMA), non-orthogonal multiple access (NOMA), OFDM-TDMA, OFDM-FDMA, OFDM-CDMA, or the like. The NOMA includes sparse code multiple access (SCMA), low cost spreading (LDS), and the like.

Some embodiments of the present disclosure may be applied to resource allocation in as well as asynchronous wireless communication evolving into LTE/LTE-advanced and IMT-2020 beyond GSM, WCDMA, and HSPA, synchronous wireless communication evolving into CDMA, CDMA-2000, and UMB.

In the present disclosure, a machine type communication (MTC) device may refer to a device that supports low cost (or low complexity), a device that supports coverage enhancement, or the like. The MTC device may refer to a device defined in a predetermined category for supporting low costs (or low complexity) and/or coverage enhancement.In other words, the MTC device may refer to a low cost (or low complexity) UE category/type newly defined in 3GPP Release-13 and performing LTE-based MTC-related operations. The MTC device may refer to a UE category/type defined in or before 3GPP Release-12 supporting enhanced coverage in comparison with the typical LTE coverage or supporting low power consumption, or may refer to a low cost (or low complexity) UE category/type newly defined in Release-13. The MTC device may refer to a further enhanced MTC device defined in Release-14.

In the present disclosure, a narrowband Internet of Things (NB-IoT) device refers to a UE supporting radio access for cellular IoT. NB-IoT technology is aimed at indoor coverage improvement, support for large-scale low-speed devices, low latency sensitivity, very low device costs, low power consumption, and optimized network architecture.

Enhanced mobile broadband (eMBB), massive machine-type communication (mMTC), and ultra reliable and low latency communication (URLLC) are proposed as representative usage scenarios in IMT-2020 having been discussed in the 3GPP recently.

### New Radio (NR)

Recently, the 3rd generation partnership project (3GPP) has approved the "Study on New Radio Access Technology", which is a study item for research on next-generation/5G radio access technology. On the basis of such a study item, Radio Access Network Working Group 1 (RAN WG1) has started discussions on frame structures, channel coding and modulation, waveforms, multiple access techniques, and the like for a new radio (NR).

The NR is required to be designed not only to provide an improved data transmission rate as compared with that of the LTE, but also to meet various requirements for each detailed and specific usage scenario.

In particular, the eMBB, mMTC, and URLLC are introduced as representative usage scenarios of the NR. It is necessary to design more flexible frame structures compared with that of the LTE for satisfying the requirements of the respective usage scenarios.

In addition, there is a necessity for designing resource allocation structures different from one another for each usage scenario, and, as a method to support this, there is growing sympathy for the necessity of multiplexing between numerologies different from one another through one NR frequency band.

That is, it is necessary to effectively design a frame structure and physical signals/channels thereof for effectively supporting NR UEs that operate under resource allocation units different from one another based on different subcarrier spacings and different transmission time interval (TTI) structures for each usage scenario or deployment scenario through one NR frequency band.

The present disclosure introduces a method of configuring a flexible numerology for the NR according to embodiments. In particular, the present disclosure proposes numerology configuration and related operations of a UE and a BS for supporting transmission and/or reception operations performed based on different numerologies (e.g., subcarrier spacings (SCS), subframes, transmission time intervals (TTI), etc.) through one NR frequency band in order to satisfy requirements of different usage scenarios and deployment scenarios.

As described above, the eMBB, mMTC, URLLC are considered as representative usage scenarios of the NR being discussed in the 3GPP. Since each usage scenario imposes different requirements for data rates, latency, coverage, etc., there is necessity for developing a method of efficiently multiplexing radio resource units based on different numerologies (e.g., subcarrier spacings (SCS), subframes, transmission time intervals (TTI), etc.), as a method to efficiently satisfy requirements for each usage scenario through a frequency band configuring an arbitrary NR system.

For example, like the LTE, there is the necessity of supporting through one NR frequency band i) a 1ms subframe (or TTI) structure based on a 15kHz subcarrier spacing, ii) a 0.5ms subframe (or TTI) structure based on a 30kHz subcarrier spacing, and iii) a 0.25ms subframe (or TTI) structure based on a 60kHz subcarrier spacing.

The present disclosure also introduces a method for effectively supporting a plurality of numerologies each having different subcarrier spacings and subframe (or TTI) lengths through one NR frequency band.

To describe some embodiments of the present disclosure, numerology types comprised of each set of a subcarrier spacing and a subframe (or TTI) length are identified as N1, N2, N3, ..., .

For example, N1 is defined as one numerology type having a 1ms subframe (or TTI) structure based on a 15kHz subcarrier spacing, and N2 is defined as another numerology type having a 0.5ms subframe (or TTI) structure based on a 30kHz subcarrier spacing, and N3 is defined as further another numerology type having 0.25ms subframe (or TTI) structure based on a 60kHz subcarrier spacing.

Embodiments of the present disclosure are not limited to the number of numerology types, and specific values of subcarrier spacings and subframe (or TTI) lengths constituting each numerology type, defined for the NR.

A frequency, a frame, a subframe, a resource, a resource block (RB), a region, a band, a sub-band, a control channel, a data channel, a synchronization signal, various reference signals, various signals, and various messages associated with the NR in the present disclosure may be construed as meanings used in the past or present or as various meanings to be used in the future.

### Embodiment 1: Definition of anchor numerology and UE-specific numerology

A frame structure in the NR according to some embodiments of the present disclosure may include an area (e.g., frequency region) configured to transmit common signals for all or a plurality of UEs (anchor numerology) and an area (e.g., region) configured to transmit UE-specific signals (UE-specific numerology).

For example, a NR BS may configure i) an anchor numerology, Nₐ, for commonly transmitting a DL physical signal(s), physical channel(s) and reference signal(s) (RS) for all UEs in the corresponding cell and ii) a set of UE-specific numerologies, {N_{UE}, k}, for transmitting a UE-specific physical channel(s), physical signal(s) and reference signal(s), etc., to each UE.

Specifically, i) a DL synchronization signal(s) for initial access of UEs in a cell, ii) a DL channel(s) for transmitting system information including cell constitution information, iii) a cell-specific DL reference signal(s) for channel measurement of the UE, and the like are transmitted or received based on one anchor numerology configured in the corresponding cell. Here, the DL channel(s) for transmitting system information includes a broadcasting channel (PBCH), a DL control channel (PDCCH) and a DL data channel PDSCH, or the like. Further, a UE-specific DL radio signal(s) and radio channel(s) are transmitted or received through a UE-specific numerology configured for each UE.

The anchor numerology, Nₐ, may be determined based on a center frequency value of a frequency band of a corresponding NR cell, or a predetermined numerology may be determined as the anchor numerology. As an alternative, the anchor numerology Nₐ may be configured by a NR BS/cell.

That is, the region of the anchor numerology, Nₐ may be determined according to the range of the frequency band of the corresponding NR cell, or a specific numerology or a numerology among a plurality of numerologies may be configured as the anchor numerology.

Additionally, a set of UE-specific numerologies, {N_{UE}, k}, which are configured by an arbitrary NR BS/cell, may be transmitted to UEs in the corresponding cell by cell-specific RRC signaling. A UE-specific numerology(s), N_{UE}, k, configured per UE may be configured semi-statically by UE-specific RRC signaling, or may be configured dynamically by L1/L2 control signaling.

Such an anchor numerology or a UE-specific numerology(s) may be configured based on the TDM, the FDM, or the hybrid TDM/FDM.

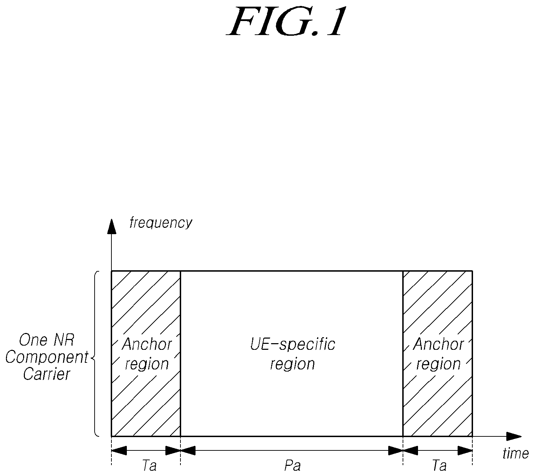

Hereinafter, referring to FIG. 1 to FIG. 4, methods of configuring an anchor numerology and a UE-specific numerology(s) and methods of transmitting/receiving a synchronization signal and system information for a UE in a corresponding structure will be discussed.

### Embodiment 2: multiplexing between anchor numerology and UE-specific numerology

### Method 1. TDM based multiplexing

FIG. 1 illustrates a method of configuring an anchor numerology and a UE-specific numerology(s) based on TDM in NR according to some embodiments of the present disclosure.

Referring to FIG. 1, an anchor numerology region is a frequency region for transmitting and receiving a DL physical signal(s)/channel(s) based on the anchor numerology. Such an anchor numerology region is configured to be maintained during an anchor interval, Tₐ based on a certain period, Pₐ. A UE-specific numerology region is a frequency region for transmitting and receiving a DL physical signal(s)/channel(s) based on the UE-specific numerology(s). Such a UE-specific numerology is configured during the other time interval(s).

In this case, in the UE-specific numerology region, UE-specific numerologies, N_{UE1}, N_{UE2}, ..., N_{UEk}, in a corresponding NR BS/cell may be configured to be multiplexed in one of a TDM technique, a FDM technique, and a hybrid TDM/FDM technique. As described, each of UE-specific numerologies may be configured differently according to a corresponding UE.

That is, in the NR, the anchor numerology region for transmitting and receiving a synchronization signal for initial access of a UE is configured during a certain interval with a certain period, and the UE-specific numerology region may be configured based on one of a TDM technique, a FDM technique, and a hybrid TDM/FDM technique.

Additionally, the anchor interval, Tₐ of the anchor numerology region may have a fixed value or be determined by an anchor numerology type, such as a subcarrier spacing and a resultant subframe or TTI length. Likewise, the period, Pₐ, repeating the anchor numerology region may also have a fixed value or be determined based on an anchor numerology type, such as a subcarrier spacing and a subframe or TTI length.

### Method 2. TDM based multiplexing

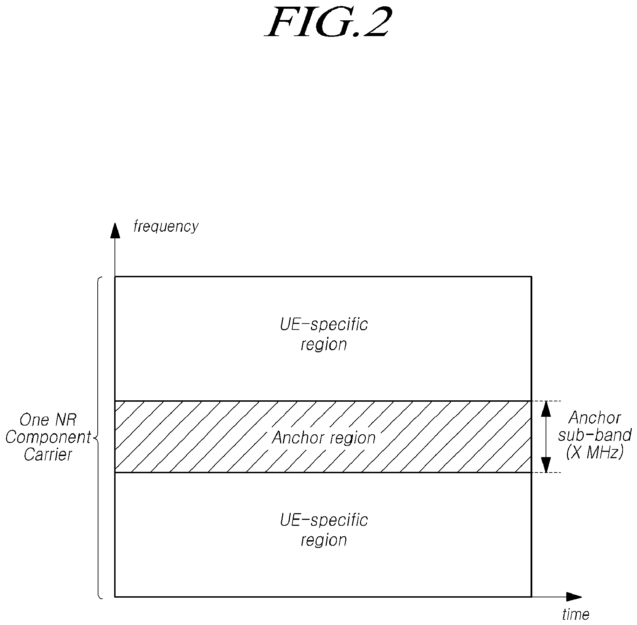

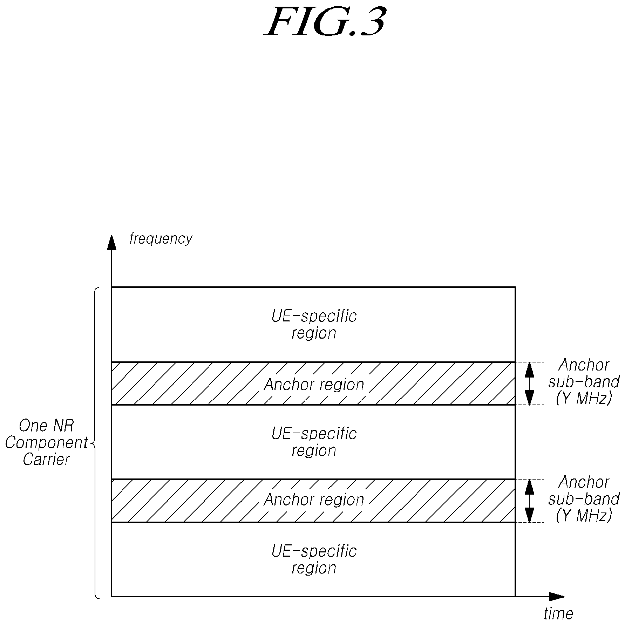

FIG. 2 and FIG. 3 illustrate exemplary methods of configuring an anchor numerology and a UE-specific numerology(s) based on the FDM in the NR according to some embodiments of the present disclosure.

Referring to FIG. 2, an anchor sub-band and UE-specific sub-bands in a NR frequency band may configured by a NR BS/cell, and an anchor numerology region and UE-specific numerology regions may be multiplexed by the FDM technique.

In this case, the anchor sub-band may be configured, in a localized method, to have a center X MHz (or K PRBs) of a NR frequency band configured by the corresponding NR BS/cell.

Further, as illustrated in FIG. 3, anchor sub-bands having a Y MHz (or M PRBs) is distributed in the entire NR system band in a distributed method.

In these cases, the values of X, Y (or K, M) may have fixed values or be determined as a function of a bandwidth of the NR frequency band or a type of the anchor numerology (such as, a subcarrier spacing and a resultant subframe or TTI length).

Additionally, UE-specific numerologies, N_{UE1}, N_{UE2}, ..., N_{UEk} may be multiplexed based one of the TDM, the FDM, and the hybrid of TDM and FDM in the corresponding UE-specific frequency. The UE specific numerologies may be configured differently according to each UE by a corresponding NR BS/cell.

### Method 3. Hybrid FDM/TDM

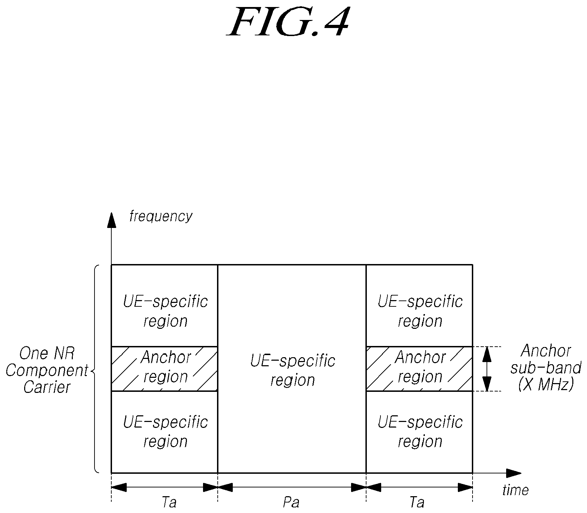

FIG. 4 illustrates an exemplary method of configuring an anchor numerology and a UE-specific numerology based on the TDM/FDM in the NR according to some embodiments of the present disclosure. For example, FIG. 4 shows the anchor numerology and UE-specific numerology configured based on the combination of the above methods 1 and 2.

Referring to FIG. 4, an anchor sub-band described in the Method 2 may be defined within an anchor interval Tₐ repeated with the period Pₐ of the Method 1 and the other time interval(s) and frequency intervals are configured to be UE-specific regions.

In this case, the anchor sub-band in the anchor interval may be configured to have a center X MHz (or K PRBs) of a NR frequency band in the localized method, as in the case of FIG. 2 in the Method 2. Further, as in the case of FIG. 3 in the Method 2, anchor sub-bands having an Y MHz (or M PRBs) is distributed in the entire NR system band in a distributed method.

That is, according to this embodiment, the anchor numerology may be configured based on one of the TDM, the FDM, and the hybrid TDM/FDM in the NR, and a common signal(e.g., transmitted commonly to UEs) may be transmitted or received through the anchor numerology region, and a UE-specific signal(s)/channel(s) may be transmitted or received through a UE-specific numerology regions.

In addition, the UE-specific numerology region(s) may be configured with a time-frequency structure different from that of the anchor numerology region, and therefore various usage scenarios may be supported in one NR frequency band.

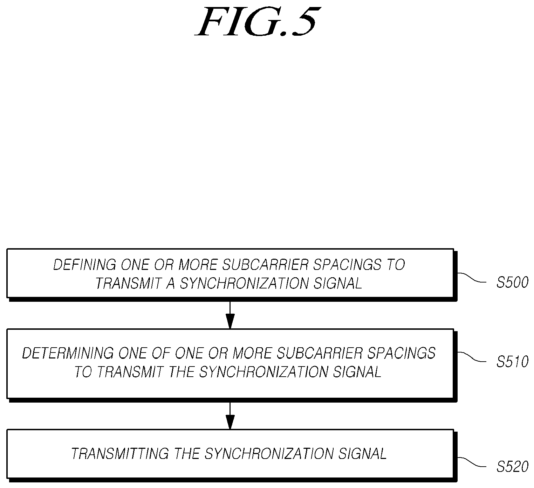

FIG. 5 is a diagram illustrating a procedure for transmitting a synchronization signal for initial access of a UE in the NR according to some embodiments of the present disclosure.

Referring to FIG. 5, in the NR, a BS defines one or more subcarrier spacings for transmitting at least one synchronization signal (PSS, SSS, PBCH, etc.) for initial access of the UE in a frequency band of the NR S500.

Here, the one or more subcarrier spacings may be determined by a center frequency value of the frequency band of the NR. That is, the one or more subcarrier spacings may be determined based on a frequency band range of the NR.

Further, one subcarrier spacing may be configured to transmit or receive the at least one synchronization signal, or a plurality of subcarrier spacings may be configured by being distributed in the frequency band of the NR.

A frequency area (e.g., frequency region) other than one or more subcarrier spacings configured to transmit at least one synchronization signal may be configured as area frequency region for transmitting or receiving a UE-specific signal/channel. At this time, the region for transmitting or receiving the UE-specific signal/channel may have a time-frequency resource structure other than the one or more subcarrier spacings for transmitting or receiving the at least one synchronization signal.

The BS determines one of the one or more subcarrier spacings to transmit the at least one synchronization signal for initial access of the UE S510.

The BS generates at least one synchronization signal for initial access of the UE based on the determined subcarrier spacing and transmits the generated at least one synchronization signal S520.

Here, the BS may transmit several synchronization signals for initial access of the UE based on the same subcarrier spacing.

As an alternative, the BS may transmit each synchronization signal based on subcarrier spacings different from one another.

That is, in a case where a plurality of subcarrier spacings are configured by being distributed in one NR frequency band, a first synchronization signal (such as, PSS) may be transmitted based on a first subcarrier spacing, and a second synchronization signal (such as, SSS) may be transmitted based on a second subcarrier spacing.

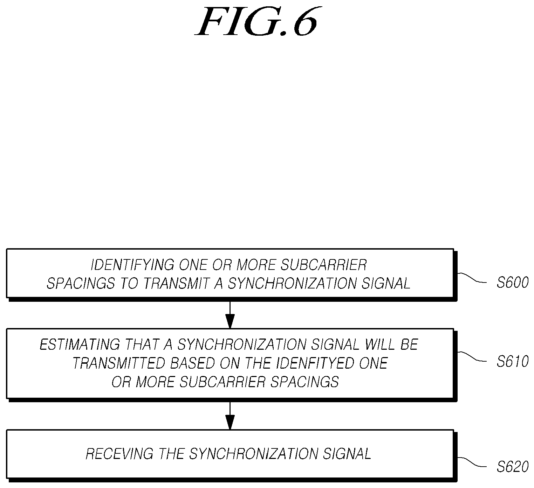

FIG. 6 is a diagram illustrating a procedure for receiving a synchronization signal for initial access by a US in the NR according to some embodiments of the present disclosure.

Referring to FIG. 6, the UE identifies a subcarrier spacing to transmit or receive a synchronization signal for initial access of the UE in a frequency band of the NR S600.

One or more subcarrier spacings to transmit or receive at least one synchronization signal for initial access of the UE may be configured by a BS in a frequency band of the NR.

For example, one or more subcarrier spacings may be determined by a center frequency value of the frequency band of the NR. That is, one or more subcarrier spacings may be defined based on the range of the frequency band of the NR.

In addition, one subcarrier spacing may be configured in the frequency band of the NR, or a plurality of subcarrier spacings may be configured by being distributed in the frequency band of the NR.

The UE estimates that at least one synchronization signal will be transmitted based on one or more subcarrier spacings defined to transmit or receive at least one synchronization signal for initial access of the UE S610, and receives the at least one synchronization signal based on the corresponding one or more subcarrier spacing S620.

Here, the UE may receive a plurality of synchronization signals based on one subcarrier spacing. As an alternative, the UE may receive each synchronization signal based on different subcarrier spacings from one another over the plurality of subcarrier spacings. That is, a first synchronization signal (such as, PSS) may be received based on a first subcarrier spacing, and a second synchronization signal (such as, SSS) may be received based on a second subcarrier spacing.

In addition, a UE-specific signal/channel may be received through a region other than the one or more subcarrier spacings configured for transmitting or receiving the at least one synchronization signal.

At this time, the region for transmitting or receiving the UE-specific signal/channel may have a time-frequency resource structure other than the one or more subcarrier spacings for transmitting or receiving the at least one synchronization signal.

According to some embodiments of the present disclosure, a frame structure may be provided for supporting various usage scenarios through one frequency band in the NR required to support several usage scenarios. In addition, specific operating methods may be provided for transmitting or receiving at least one synchronization signal for initial access between the BS and the UE in a frame configured with multiple numerologies.

In addition, the above embodiments may be applied for the transmission or reception of at least one channel through which system information is transmitted. At this time, one or more subcarrier spacings of at least one channel for the transmission or reception of system information which is not transmitted or received through a broadcasting channel (PBCH) may be signaled through the broadcasting channel (PBCH). In addition, a subcarrier spacing for the broadcasting channel (PBCH) and a subcarrier spacing of another channel for transmitting or receiving system information may be the same.

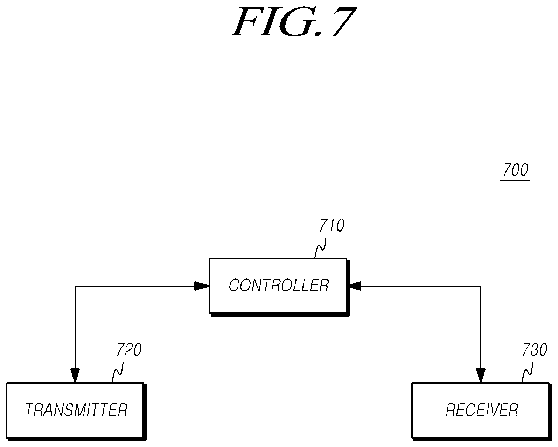

FIG. 7 is a diagram illustrating a BS according to some embodiments of the present disclosure.

Referring to FIG. 7, a BS 700 includes a controller 710, a transmitter 720, and a receiver 730.

The controller 710 is configured to control overall operations of the BS 700 for configuring an anchor numerology type and a UE-specific numerology type required to perform the above embodiments of the present disclosure, transmitting or receiving system information through the anchor numerology type, and transmitting or receiving a UE-specific signal through the UE-specific numerology type.

The transmitter 720 and the receiver 730 are configured to transmit and receive signals, messages, and data necessary for carrying out some embodiments as described above, to and from the UE.

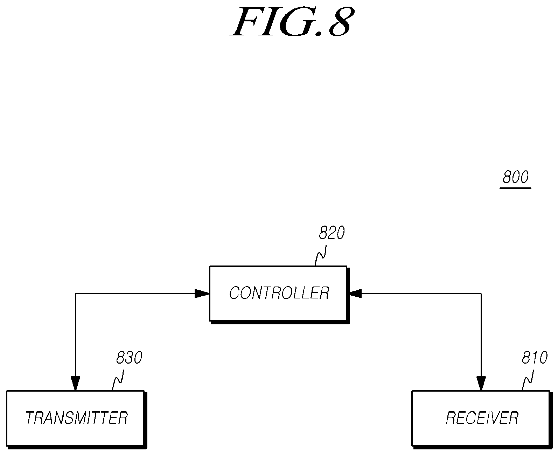

FIG. 8 illustrates a UE according to some embodiments of the present disclosure.

Referring to FIG. 8, a UE 800 according to some embodiments of the present disclosure includes a receiver 810, a controller 820, and a transmitter 830.

The receiver 810 receives DL control information and data, messages through a corresponding channel from a BS.

The controller 820 is configured to control overall operations of the UE 800, in a state where an anchor numerology type and a UE-specific numerology type required to perform the above embodiments of the present disclosure are configured, for transmitting or receiving system information through the configured anchor numerology type, and transmitting or receiving a UE-specific signal through the UE-specific numerology type.

The transmitter 830 is configured to transmit UL control information and data, messages through a corresponding channel to the BS.

## Claims

1. A method of transmitting a synchronization signal and system information, from a base station (700) of a cell to a user equipment, UE, (800) in an access network, the method comprising:
determining at the base station (S510) an anchor numerology among a plurality of subcarrier spacings to transmit at least one synchronization signal and at least one system information transmission channel for the UE initial access;
transmitting by the base station (S520) the at least one synchronization signal and the at least one system information transmission channel for the UE initial access based on the determined anchor numerology; and
configuring by the base station a set of UE-specific numerologies to transmit UE-specific physical channels, physical signals, and reference signals,
wherein a subcarrier spacing transmitting system information which is not transmitted by a physical broadcasting channel, PBCH, among the at least one system information transmission channel is signaled through the PBCH.

2. The method according to claim 1, wherein the anchor numerology to transmit the at least one synchronization signal and the at least one system information transmission channel for the UE initial access are determined by a range of the frequency band of the access network.

3. The method according to claim 1, wherein a subcarrier spacing transmitting system information which is not transmitted by the PBCH among the at least one system information transmission channel is the same as subcarrier spacing for transmitting the PBCH.

4. The method according to claim 1, wherein a UE-specific resource allocation structure for transmitting or receiving a UE-specific signal and channel is configured by UE-specific high layer signaling.

5. A method of receiving a synchronization signal and system information, from a base station of a cell by a user equipment, UE, in an access network, the method comprising:
estimating at the UE (S610) an anchor numerology for commonly transmitting at least one synchronization signal and at least one system information transmission channel for the UE initial access among the plurality of subcarrier spacings;
receiving by the UE (S620) the at least one synchronization signal and the at least one system information transmission channel for the UE initial access based on the estimated anchor numerology; and
receiving a configuration from the base station by the user equipment a set of UE-specific numerologies to receive UE-specific physical channels, physical signals, and reference signals,
wherein a subcarrier spacing transmitting system information which is not transmitted by a physical broadcasting channel, PBCH, among the at least one system information transmission channel is signaled through the PBCH.

6. The method according to claim 5, wherein the anchor numerology to transmit the at least one synchronization signal and the at least one system information transmission channel are determined by a range of the frequency band of the access network.

7. The method according to claim 5, wherein a subcarrier spacing transmitting system information which is not transmitted by the PBCH among the at least one system information transmission channel is the same as a subcarrier spacing for transmitting the PBCH.

8. The method according to claim 5, wherein a UE-specific resource allocation structure for transmitting or receiving a UE-specific signal and channel is configured by UE-specific high layer signaling.

9. A base station (700) for transmitting a synchronization signal and a system information to a user equipment, UE, in an access network, the base station comprising:
a controller (710) configured:
to determine an anchor numerology among a plurality of subcarrier spacings to transmit the at least one synchronization signal and the at least one system information transmission channel for the UE initial access, and
to configure a set of UE-specific numerologies to transmit UE-specific physical channels, physical signals, and reference signals;
a transmitter (720) configured:
to transmit at least one synchronization signal and the at least one system information transmission channel for the UE initial access based on the determined anchor numerology,
wherein a subcarrier spacing transmitting system information which is not transmitted by the PBCH among the at least one system information transmission channel is signaled through the PBCH.

10. The base station according to claim 9, wherein the anchor numerology to transmit the at least one synchronization signal and the at least one system information transmission channel for the UE initial access are determined by a range of the frequency band of the access network.

11. The base station according to claim 9, wherein a subcarrier spacing transmitting system information which is not transmitted by the PBCH among the at least one system information transmission channel is the same as a subcarrier spacing for transmitting the PBCH.

12. The base station according to claim 9, wherein a UE-specific resource allocation structure for transmitting or receiving a UE-specific signal and channel is configured by UE-specific high layer signaling.

13. A user equipment, UE, (800) for receiving a synchronization signal and system information, from a base station of a cell in an access network, the UE comprising:
a controller (820) configured to estimate at the UE (S610) an anchor numerology, determined by the base station, for commonly transmitting at least one synchronization signal and at least one system information transmission channel for the UE initial access among the plurality of subcarrier spacings; and
a receiver (810) configured to receive by the UE (S620) the at least one synchronization signal and the at least one system information transmission channel for the UE initial access based on the estimated anchor numerology; and to receive a configuration, configured by the base station, a set of UE-specific numerologies to receive UE-specific physical channels, physical signals, and reference signals,
wherein a subcarrier spacing transmitting system information which is not transmitted by a physical broadcasting channel, PBCH, among the at least one system information transmission channel is signaled through the PBCH.

14. The UE according to claim 13, wherein the anchor numerology to transmit the at least one synchronization signal and the at least one system information transmission channel are determined by a range of the frequency band of access network.

15. The UE according to claim 13, wherein a subcarrier spacing transmitting system information which is not transmitted by the PBCH among the at least one system information transmission channel is the same as a subcarrier spacing for transmitting the PBCH.

16. The UE according to claim 13, wherein a UE-specific resource allocation structure for transmitting or receiving a UE-specific signal and channel is configured by UE-specific high layer signaling.

## Patentansprüche

1. Verfahren zum Senden eines Synchronisationssignals und von Systeminformationen von einer Basisstation (700) einer Zelle an ein Benutzergerät, UE, (800) in einem Zugangsnetzwerk, wobei das Verfahren umfasst:
Bestimmen, an der Basisstation (S510), einer Ankernumerologie aus einer Mehrzahl von Unterträgerabständen zum Senden mindestens eines Synchronisationssignals und mindestens eines Übertragungskanals für Systeminformationen für den UE-Erstzugriff;
Senden, durch die Basisstation (S520), des mindestens einen Synchronisationssignals und des mindestens einen Übertragungskanals für Systeminformationen für den UE-Erstzugriff auf Grundlage der bestimmten Ankernumerologie; und
Konfigurieren, durch die Basisstation, eines Satzes UE-spezifischer Numerologien zum Senden UE-spezifischer physikalischer Kanäle, physikalischer Signale und Referenzsignale,
wobei ein Unterträgerabstand zum Senden von Systeminformationen, die aus dem mindestens einen Übertragungskanal für Systeminformationen nicht durch einen physikalischen Broadcast-Kanal, PBCH, gesendet werden, über den PBCH signalisiert wird.

2. Verfahren nach Anspruch 1, wobei die Ankernumerologie zum Senden des mindestens einen Synchronisationssignals und des mindestens einen Übertragungskanals für Systeminformationen für den UE-Erstzugriff durch einen Bereich des Frequenzbandes des Zugangsnetzwerkes bestimmt wird.

3. Verfahren nach Anspruch 1, wobei ein Unterträgerabstand zum Senden von Systeminformationen, die aus dem mindestens einen Übertragungskanal für Systeminformationen nicht durch den PBCH gesendet werden, derselbe ist wie ein Unterträgerabstand zum Senden des PBCH.

4. Verfahren nach Anspruch 1, wobei eine UE-spezifische Ressourcenzuweisungsstruktur zum Senden oder Empfangen eines UE-spezifischen Signals und eines UE-spezifischen Kanals durch UE-spezifische Signalisierung höherer Schichten konfiguriert wird.

5. Verfahren zum Empfangen eines Synchronisationssignals und von Systeminformationen von einer Basisstation einer Zelle durch ein Benutzergerät, UE, in einem Zugangsnetzwerk, wobei das Verfahren umfasst:
Schätzen, am UE (S610), einer Ankernumerologie aus der Mehrzahl von Unterträgerabständen zum gemeinsamen Senden mindestens eines Synchronisationssignals und mindestens eines Übertragungskanals für Systeminformationen für den UE-Erstzugriff;
Empfangen, durch das UE (S620), des mindestens einen Synchronisationssignals und des mindestens einen Übertragungskanals für Systeminformationen für den UE-Erstzugriff auf Grundlage der geschätzten Ankernumerologie; und
Empfangen, durch das Benutzergerät, einer Konfiguration eines Satzes UE-spezifischer Numerologien von der Basisstation zum Empfangen UE-spezifischer physikalischer Kanäle, physikalischer Signale und Referenzsignale,
wobei ein Unterträgerabstand zum Senden von Systeminformationen, die aus dem mindestens einen Übertragungskanal für Systeminformationen nicht durch einen physikalischen Broadcast-Kanal, PBCH, gesendet werden, über den PBCH signalisiert wird.

6. Verfahren nach Anspruch 5, wobei die Ankernumerologie zum Senden des mindestens einen Synchronisationssignals und des mindestens einen Übertragungskanals für Systeminformationen durch einen Bereich des Frequenzbandes des Zugangsnetzwerkes bestimmt wird.

7. Verfahren nach Anspruch 5, wobei ein Unterträgerabstand zum Senden von Systeminformationen, die aus dem mindestens einen Übertragungskanal für Systeminformationen nicht durch den PBCH gesendet werden, derselbe ist wie ein Unterträgerabstand zum Senden des PBCH.

8. Verfahren nach Anspruch 5, wobei eine UE-spezifische Ressourcenzuweisungsstruktur zum Senden oder Empfangen eines UE-spezifischen Signals und eines UE-spezifischen Kanals durch UE-spezifische Signalisierung höherer Schichten konfiguriert wird.

9. Basisstation (700) zum Senden eines Synchronisationssignals und von Systeminformationen an ein Benutzergerät, UE, in einem Zugangsnetzwerk, wobei die Basisstation umfasst:
eine Steuereinrichtung (710), die eingerichtet ist zum:
Bestimmen einer Ankernumerologie aus einer Mehrzahl von Unterträgerabständen zum Senden des mindestens einen Synchronisationssignals und des mindestens einen Übertragungskanals für Systeminformationen für den UE-Erstzugriff, und
Konfigurieren eines Satzes UE-spezifischer Numerologien zum Senden UE-spezifischer physikalischer Kanäle, physikalischer Signale und Referenzsignale;
einen Sender (720), der eingerichtet ist zum:
Senden mindestens eines Synchronisationssignals und des mindestens einen Übertragungskanals für Systeminformationen für den UE-Erstzugriff auf Grundlage der bestimmten Ankernumerologie,
wobei ein Unterträgerabstand zum Senden von Systeminformationen, die aus dem mindestens einen Übertragungskanal für Systeminformationen nicht durch den PBCH gesendet werden, über den PBCH signalisiert wird.

10. Basisstation nach Anspruch 9, wobei die Ankernumerologie zum Senden des mindestens einen Synchronisationssignals und des mindestens einen Übertragungskanals für Systeminformationen für den UE-Erstzugriff durch einen Bereich des Frequenzbandes des Zugangsnetzwerkes bestimmt wird.

11. Basisstation nach Anspruch 9, wobei ein Unterträgerabstand zum Senden von Systeminformationen, die aus dem mindestens einen Übertragungskanal für Systeminformationen nicht durch den PBCH gesendet werden, derselbe ist wie ein Unterträgerabstand zum Senden des PBCH.

12. Basisstation nach Anspruch 9, wobei eine UE-spezifische Ressourcenzuweisungsstruktur zum Senden oder Empfangen eines UE-spezifischen Signals und eines UE-spezifischen Kanals durch UE-spezifische Signalisierung höherer Schichten konfiguriert wird.

13. Benutzergerät, UE, (800) zum Empfangen eines Synchronisationssignals und von Systeminformationen von einer Basisstation einer Zelle in einem Zugangsnetzwerk, wobei das UE umfasst:
eine Steuereinrichtung (820), die eingerichtet ist zum Schätzen, am UE (S610), einer durch die Basisstation bestimmten Ankernumerologie aus der Mehrzahl von Unterträgerabständen zum gemeinsamen Senden mindestens eines Synchronisationssignals und mindestens eines Übertragungskanals für Systeminformationen für den UE-Erstzugriff; und
einen Empfänger (810), der eingerichtet ist zum Empfangen, durch das UE (S620), des mindestens einen Synchronisationssignals und des mindestens einen Übertragungskanals für Systeminformationen für den UE-Erstzugriff auf Grundlage der geschätzten Ankernumerologie; und zum Empfangen einer von der Basisstation vorgenommenen Konfiguration eines Satzes UE-spezifischer Numerologien zum Empfangen UE-spezifischer physikalischer Kanäle, physikalischer Signale und Referenzsignale,
wobei ein Unterträgerabstand zum Senden von Systeminformationen, die aus dem mindestens einen Übertragungskanal für Systeminformationen nicht durch einen physikalischen Broadcast-Kanal, PBCH, gesendet werden, über den PBCH signalisiert wird.

14. UE nach Anspruch 13, wobei die Ankernumerologie zum Senden des mindestens einen Synchronisationssignals und des mindestens einen Übertragungskanals für Systeminformationen durch einen Bereich des Frequenzbandes des Zugangsnetzwerkes bestimmt wird.

15. UE nach Anspruch 13, wobei ein Unterträgerabstand zum Senden von Systeminformationen, die aus dem mindestens einen Übertragungskanal für Systeminformationen nicht durch den PBCH gesendet werden, derselbe ist wie ein Unterträgerabstand zum Senden des PBCH.

16. UE nach Anspruch 13, wobei eine UE-spezifische Ressourcenzuweisungsstruktur zum Senden oder Empfangen eines UE-spezifischen Signals und eines UE-spezifischen Kanals durch UE-spezifische Signalisierung höherer Schichten konfiguriert wird.

## Revendications

1. Procédé de transmission d'un signal de synchronisation et d'informations système, en provenance d'une station de base (700) d'une cellule à un équipement utilisateur, UE, (800) dans un réseau d'accès, le procédé comprenant:
la détermination, au niveau de la station de base (S510), d'une numérologie d'ancrage parmi une pluralité d'espacements de sous-porteuses afin de transmettre au moins un signal de synchronisation et au moins un canal de transmission d'informations système pour l'accès initial de l'UE;
la transmission, par la station de base (S520), de l'au moins un signal de synchronisation et de l'au moins un canal de transmission d'informations système pour l'accès initial de l'UE, sur la base de la numérologie d'ancrage déterminée; et
la configuration, par la station de base, d'un ensemble de numérologies spécifiques à l'UE pour transmettre des canaux physiques, des signaux physiques et des signaux de référence spécifiques à l'UE,
dans lequel un espacement de sous-porteuse transmettant des informations système qui ne sont pas transmises par un canal physique de diffusion, PBCH, parmi l'au moins un canal de transmission d'informations système, est signalé par l'intermédiaire du PBCH.

2. Procédé selon la revendication 1, dans lequel la numérologie d'ancrage permettant de transmettre l'au moins un signal de synchronisation et l'au moins un canal de transmission d'informations système pour l'accès initial de l'UE sont déterminés par une bande de fréquences du réseau d'accès.

3. Procédé selon la revendication 1, dans lequel l'espacement des sous-porteuses utilisé pour transmettre des informations système qui ne sont pas transmises par le PBCH parmi l'au moins un canal de transmission d'informations système est identique à l'espacement des sous-porteuses utilisé pour transmettre le PBCH.

4. Procédé selon la revendication 1, dans lequel une structure d'allocation de ressources spécifique à l'UE, pour transmettre ou recevoir un signal et un canal spécifiques à l'UE, est configurée par la signalisation de couche supérieure spécifique à l'UE.

5. Procédé de réception d'un signal de synchronisation et d'informations système, en provenance d'une station de base d'une cellule par un équipement utilisateur, UE, dans un réseau d'accès, le procédé comprenant:
l'estimation, au niveau de l'UE (S610), d'une numérologie d'ancrage pour transmettre au moins un signal de synchronisation et au moins un canal de transmission d'informations système pour l'accès initial de l'UE parmi la pluralité d'espacements de sous-porteuses;
la réception, par l'UE (S620), de l'au moins un signal de synchronisation et de l'au moins un canal de transmission d'informations système pour l'accès initial de l'UE, sur la base de la numérologie d'ancrage estimée; et
la réception d'une configuration en provenance de la station de base, par l'équipement utilisateur, d'un ensemble de numérologies spécifiques à l'UE pour recevoir des canaux physiques, des signaux physiques et des signaux de référence spécifiques à l'UE,
dans lequel un espacement de sous-porteuse transmettant des informations système qui ne sont pas transmises par un canal physique de diffusion, PBCH, parmi l'au moins un canal de transmission d'informations système, est signalé par l'intermédiaire du PBCH.

6. Procédé selon la revendication 5, dans lequel la numérologie d'ancrage permettant de transmettre l'au moins un signal de synchronisation et l'au moins un canal de transmission d'informations système sont déterminés par une bande de fréquences du réseau d'accès.

7. Procédé selon la revendication 5, dans lequel l'espacement des sous-porteuses utilisé pour transmettre des informations système qui ne sont pas transmises par le PBCH parmi l'au moins un canal de transmission d'informations système est identique à l'espacement des sous-porteuses utilisé pour transmettre le PBCH.

8. Procédé selon la revendication 5, dans lequel une structure d'allocation de ressources spécifique à l'UE, pour transmettre ou recevoir un signal et un canal spécifiques à l'UE, est configurée par la signalisation de couche supérieure spécifique à l'UE.

9. Station de base (700) pour transmettre un signal de synchronisation et des informations système à un équipement utilisateur, UE, dans un réseau d'accès, la station de base comprenant:
un organe de commande (710) configuré pour:
déterminer une numérologie d'ancrage parmi une pluralité d'espacements de sous-porteuses afin de transmettre l'au moins un signal de synchronisation et l'au moins un canal de transmission d'informations système pour l'accès initial de l'UE; et
configurer un ensemble de numérologies spécifiques à l'UE pour transmettre des canaux physiques, des signaux physiques et des signaux de référence spécifiques à l'UE;
un émetteur (720) configuré pour :
recevoir l'au moins un signal de synchronisation et de l'au moins un canal de transmission d'informations système pour l'accès initial de l'UE, sur la base de la numérologie d'ancrage déterminée,
dans lequel un espacement de sous-porteuse transmettant des informations système qui ne sont pas transmises par le PBCH, parmi l'au moins un canal de transmission d'informations système, est signalé par l'intermédiaire du PBCH.

10. Station de base selon la revendication 9, dans lequel la numérologie d'ancrage permettant de transmettre l'au moins un signal de synchronisation et l'au moins un canal de transmission d'informations système pour l'accès initial de l'UE sont déterminés par une bande de fréquences du réseau d'accès.

11. Station de base selon la revendication 9, dans lequel l'espacement des sous-porteuses utilisé pour transmettre des informations système qui ne sont pas transmises par le PBCH parmi l'au moins un canal de transmission d'informations système est identique à l'espacement des sous-porteuses utilisé pour transmettre le PBCH.

12. Station de base selon la revendication 9, dans lequel une structure d'allocation de ressources spécifique à l'UE, pour transmettre ou recevoir un signal et un canal spécifiques à l'UE, est configurée par la signalisation de couche supérieure spécifique à l'UE.

13. Équipement utilisateur, UE, (800) pour recevoir un signal de synchronisation et des informations système, en provenance d'une station de base d'une cellule dans un réseau d'accès, l'UE comprenant:
un organe de commande (820) configuré pour estimer au niveau de l'UE (S610),
d'une numérologie d'ancrage, déterminée par la station de base, pour transmettre au moins un signal de synchronisation et au moins un canal de transmission d'informations système pour l'accès initial de l'UE parmi la pluralité d'espacements de sous-porteuses; et
un récepteur (810) configuré pour recevoir, par l'UE (S620), l'au moins un signal de synchronisation et l'au moins un canal de transmission d'informations système pour l'accès initial de l'UE sur la base de la numérologie d'ancrage estimée; et pour recevoir une configuration, définie par la station de base, d'un ensemble de numérologies spécifiques à l'UE pour recevoir des canaux physiques, des signaux physiques et des signaux de référence spécifiques à l'UE,
dans lequel un espacement de sous-porteuse transmettant des informations système qui ne sont pas transmises par un canal physique de diffusion, PBCH, parmi l'au moins un canal de transmission d'informations système, est signalé par l'intermédiaire du PBCH.

14. UE selon la revendication 13, dans lequel la numérologie d'ancrage permettant de transmettre l'au moins un signal de synchronisation et l'au moins un canal de transmission d'informations système sont déterminés par une bande de fréquences du réseau d'accès.

15. UE selon la revendication 13, dans lequel l'espacement des sous-porteuses utilisé pour transmettre des informations système qui ne sont pas transmises par le PBCH parmi l'au moins un canal de transmission d'informations système est identique à l'espacement des sous-porteuses utilisé pour transmettre le PBCH.

16. UE selon la revendication 13, dans lequel une structure d'allocation de ressources spécifique à l'UE, pour transmettre ou recevoir un signal et un canal spécifiques à l'UE, est configurée par la signalisation de couche supérieure spécifique à l'UE.
